# EUROPEAN PATENT APPLICATION

(11) **EP 2 472 231 A1**
(43) Date of publication of application: **04.07.2012**
(21) Application number: 11195550.6
(22) Date of filing: 23.12.2011
(51) Int. Cl.: G01D 4/00

(54) **Systems, methods, and apparatus for providing security services utilizing a smart utility meter**

(30) Priority: 04.01.2011 US 984238
(71) Applicant: General Electric Company, Schenectady, New York 12345 (US)
(72) Inventor: Pamulaparthy, BalaKrishna, 500081 Andhra Pradesh (IN); Gerdan, George Paul, Upper Beaconsfield, Victoria 3808 (AU); Vadali, K.V.S Manoj Kumar, 560066 Andhra Pradesh (IN); Rameshchandra, Supeda Prahladbhai, 500081 Gujarat (IN)
(74) Representative: Cleary, Fidelma

(57) **Abstract**

Systems, methods, and apparatus for providing security services utilizing a smart utility meter are provided. A utility meter (105) may include at least one local network interface (136), at least one transceiver (136), and at least one processor (132). The at least one local network interface (136) may be configured to receive (210) security monitoring data from one or more security devices (110). The at least one transceiver may be configured to communicate (225), to at least one of a user device (125) or a security monitoring center (120) via a wide area network, one or more messages associated with the received security monitoring data. The at least one processor (132) may be configured to generate, based at least in part upon the received security monitoring data, the one or more messages and direct the at least one transceiver to output (225) the one or more messages.

## Description

### FIELD OF THE INVENTION

Embodiments of the invention relate generally to utility meters, and more specifically to systems, methods, and apparatus for providing security services and/or energy management utilizing a smart utility meter.

### BACKGROUND OF THE INVENTION

Utility meters, such as electrical meters, are typically utilized at residences and businesses to monitor the provision of one or more utility services. Recently, a wide variety of different types of smart meters and advanced meters have been developed to facilitate the collection of additional consumption data and to facilitate various network communications between the meters and other entities, such as a local utility. Smart meters are utilized for a wide variety of purposes, such as billing purposes, and power outage detection.

Additionally, a wide variety of security devices and security systems are utilized within residences and businesses to provide access control and security monitoring services. Typically, conventional security systems communicate with external controllers, such as central monitoring systems, via wired telephone line or via dedicated wireless devices. However, these conventional communications techniques often result in additional expenses for consumers, such as monthly service fees to maintain a wired telephone line or a wireless channel dedicated to a security system. Additionally, conventional security systems are not capable of monitoring or controlling the provision of power to various electrical loads and/or electrical devices within a monitored structure.

Accordingly, systems, methods, and apparatus for providing home security services and/or energy management utilizing a smart utility meter are desirable.

### BRIEF DESCRIPTION OF THE INVENTION

Some or all of the above needs and/or problems may be addressed by certain embodiments of the invention. Embodiments of the invention may include systems, methods, and apparatus for providing security services utilizing a smart utility meter. The invention resides in a utility meter that is configured to provide home security services. The utility meter may include at least one local network interface, at least one transceiver, and at least one processor. The at least one local network interface may be configured to receive security monitoring data from one or more security devices. The at least one transceiver may be configured to communicate one or more messages associated with the received security monitoring data to at least one of (i) a user device or (ii) a security monitoring center via a wide area network. The at least one processor may be configured to (i) generate, based at least in part upon the received security monitoring data, the one or more messages, and (ii) direct the at least one transceiver to output the one or more messages.

The invention further resides in a method for providing home security services. Security monitoring data may be received by a utility meter from one or more security devices via at least one local network. Based at least in part upon the received security monitoring data, one or more security messages may be generated by the utility meter. The one or more generated messages may be communicated by the utility meter to at least one of (i) a user device or (ii) a security monitoring center via a wide area network.

The invention also resides in a system for providing home security services including one or more presence detection sensing devices and the utility meter described above.

### BRIEF DESCRIPTION OF THE DRAWINGS

Embodiments of the present invention will now be described, by way of example only, with reference to the accompanying drawings in which:
FIG. 1 is a block diagram of one example system that facilitates the provision of security services, according to an illustrative embodiment of the invention.
FIG. 2 is a flowchart of an example method for providing security services utilizing a smart utility meter, according to an illustrative embodiment of the invention.
FIG. 3 is a flowchart of an example method for providing energy management services utilizing a smart utility meter, according to an illustrative embodiment of the invention.
FIG. 4 is a flowchart of an example method for providing security services utilizing a smart utility meter during a power failure event, according to an illustrative embodiment of the invention.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems, methods, and apparatus for providing security services utilizing a smart utility meter. In certain embodiments, a smart utility meter may be provided, and the utility meter may be configured to communicate with any number of security devices and/or security systems associated with a structure, location household, residence, or business. For example, the smart utility meter may be configured to communicate with a central panel or controller of a home security system, any number of security controllers, and/or any number of security sensors and/or devices (e.g., presence detectors or sensors, access control devices, mechanical safety switches, contact switches, vibration sensors, etc.). A wide variety of suitable local area networks and/or communications techniques may be utilized to facilitate communication between the utility meter and the various security devices. For example, a Home Area Network ("HAN") and/or a ZigBee adaptor may be utilized to facilitate communication between the utility meter and the various security devices. In this regard, the utility meter may be configured to receive a wide variety of security monitoring data, such as presence detection data, alert or alarm messages, access control data, etc.

Once security monitoring data has been received by the utility meter, the utility meter may process the received data in order to generate one or more messages that may be communicated by the utility meter to one or more remote devices or systems, such as user or customer devices and/or a central security monitoring center. In certain embodiments, the utility meter may receive alert messages and/or other messages from a security system or security device, and the utility meter may format the received messages for communication to the remote devices or systems. In other embodiments, the utility meter may analyze received security monitoring data and generate alert messages and/or other types of messages based upon an analysis of the security monitoring data. The utility meter may utilize any number of suitable wide area networks and/or communications techniques to facilitate communication of one or more messages to the remote devices or systems. For example, the utility meter may include a transceiver or interfaces, such as a power line carrier communication ("PLCC") transceiver, configured to communicate messages via broadband over power line ("BPL") communications. As another example, the utility meter may include a transceiver, such as a Global System for Mobile Communications ("GSM") transceiver or (ii) a General Packet Radio Service ("GPRS") transceiver, a Worldwide Interoperability for Microwave Access ("WiMAX") transceiver, an Ethernet transceiver, a 3G transceiver, or a radio frequency ("RF") mesh transceiver, that is configured to communicate messages via a wireless network or mobile network. As desired, messages may be communicated as a short message service ("SMS") messages, electronic mail messages, voice messages (e.g., voicemail, etc.), or other suitable types of messages (e.g., generated electronic files and/or reports). In this regard, the communication of security data may be facilitated by the utility meter. Accordingly, a customer will not be required to maintain a telephone line or dedicated mobile line that is utilized by a security system.

Accordingly to an aspect of the invention, the utility meter may additionally monitor or evaluate security monitoring data, such as presence detection data and/or access control data, in order to manage the provision of power within a location or residence. For example, the utility meter may determine, based upon data received from a presence detection sensor (e.g., motion sensor, etc.) and/or an electronic lock, that a particular area or room within a structure is unoccupied. Based upon the determination, the utility meter may direct the supply of power to the area to be discontinued or altered. Alternatively, the utility meter may communicate control signals to one or more power management devices and/or electrical devices within the area, such as lights, appliances, televisions, air conditioning and/or heating units, etc., directing the electrical devices to be turned off and/or otherwise directing the operation of the electrical devices to be altered. For example, lights may be turned off. As another example, the output of an air conditioning unit may be altered.

Additionally, in certain embodiments, the utility meter include one or more power supplies, such as one or more batteries or electric double-layer capacitors (or super capacitors). In this regard, the utility meter may be powered in the event of a power outage or loss of power event. Further, the utility meter may be configured to identify a loss of power event, such as a loss of power via an electrical power line. Based upon the identified loss of power event, the utility meter may be configured to generate an alert message and communicate the alert message to one or more remote devices and/or systems.

Various embodiments of the invention may include one or more special purpose computers, systems, and/or particular machines that facilitate the provision of security services via a utility meter. A special purpose computer or particular machine may include a wide variety of different software modules as desired in various embodiments. As explained in greater detail below, in certain embodiments, these various software components may be utilized to facilitate communications between security devices and one or more remote devices and/or systems. Additionally, these various software components may be utilized to manage power distribution.

Certain embodiments of the invention described herein may have the technical effect of providing a security service and/or facilitating the communication and/or routing of security signals. For example, a utility meter may receive security monitoring data from any number of security devices and/or sensors, and the utility meter may generate and/or communicate security messages to any number of remote monitoring centers and/or user devices. In this regard, security services may be provided without a customer being required to maintain a telephone line or dedicated mobile device to facilitate communications. Certain embodiments of the invention may further have the technical effect of managing power distribution based upon security monitoring data.

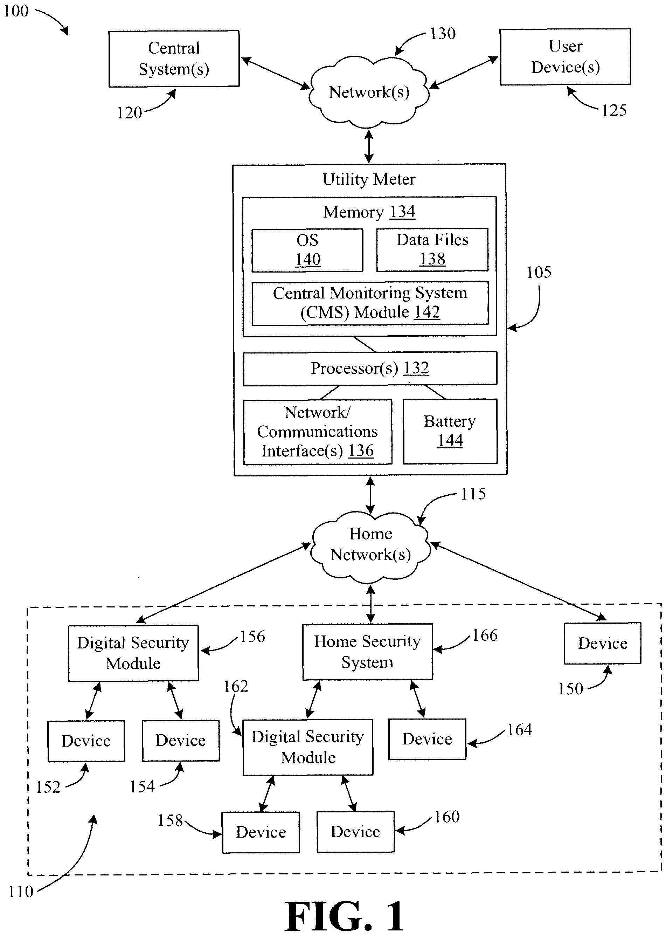

FIG. 1 is a block diagram of one example system 100 that facilitates the provision of security services, according to an illustrative embodiment of the invention. The system 100 illustrated in FIG. 1 may include a utility meter 105, one or more security devices 110 in communication with the utility 105 meter via one or more local networks 115 or home networks, and/or one or more central systems 120 and/or user devices 125 in communication with the utility meter 105 via one or more other networks 130.

The utility meter 105 may be any suitable utility meter that may be connected to a distribution system, such as an electrical meter connected to a power distribution grid that includes any number of power lines. For purposes of this disclosure, the utility meter 105 is described as an electrical utility meter, although other types of meters may be utilized, such as a remote disconnect meter, a gas meter, a water meter, etc. A wide variety of suitable electrical meters may be utilized as desired in various embodiments, such as a single phase meter or a three-phase meter. The utility meter 105 may be configured to measure an amount of electrical energy (e.g., kilowatt hours, etc.) or electrical power that is supplied to an associated location, residence, business, household, or machine. In certain embodiments, the utility meter 105 may be a smart meter or an advanced meter that is configured to identify consumption in relatively greater detail than a conventional meter. For example, a smart utility meter 105 may facilitate real-time or near real-time readings, power outage notification, and/or power quality monitoring. Additionally, as desired, a smart utility meter 105 may communicate measurements data, calculations, and/or other information to one or more recipients, such as a local utility or smart meter data processing system.

According to an aspect of the invention, the utility meter 105 may additionally facilitate the provision of security services. For example, the utility meter 105 may be configured to receive security monitoring data from one or more security devices 110, and the utility meter 105 may communicate one or more messages associated with the security monitoring data to the central systems 120 and/or user devices 125. Additionally, in certain embodiments, the utility meter 105 may be configured to control the provision of electrical power to one or more areas of the location, such as one or more rooms within a household.

The utility meter 105 may include any number of suitable computer processing components that facilitate the operation of the utility meter, the provision of a security service, and/or the provision of electrical power to a location. Examples of suitable processing devices that may be incorporated into the utility meter 105 include, but are not limited to, application specific circuits, microcontrollers, minicomputers, other computing devices, and the like. As such the utility meter 105 may include any number of processors 132 that facilitate the execution of computer-readable instructions. By executing computer-readable instructions, the utility meter 105 may include or form a special purpose computer or particular machine that facilitates the provision of a utility service and/or the provision of electrical power to a location.

In addition to one or more processor(s) 132, the utility meter 105 may include one or more memory devices 134 and/or one or more network and/or communications interfaces 136. The one or more memory devices 134 or memories may include any suitable memory devices, for example, caches, read-only memory devices, random access memory devices, magnetic storage devices, etc. The one or more memory devices 134 may store data, executable instructions, and/or various program modules utilized by the utility meter 105, for example, data files 138, an operating system ("OS") 140, and/or a central monitoring system ("CMS") module 142. The data files 138 may include, for example, stored data associated with the operation of the utility meter 105, stored data associated with measurements and/or readings taken by the utility meter 105, stored security monitoring data received from the security devices 110, stored security messages and/or alerts, and/or stored power management and/or power distribution data. The OS 140 may include executable instructions and/or program modules that facilitate and/or control the general operation of the utility meter 105. For example, the OS 140 may facilitate the execution of other software programs and/or program modules by the processors 132.

The CMS module 142 or CMS application may be a suitable software module that is configured to receive security monitoring data and process at least a portion of the received security monitoring data to direct the communication of one or more security messages to any number of recipients, such as the central systems 120 and/or the user devices 125. As desired in certain embodiments, the CMS module 142 may additionally facilitate, based upon an analysis of received security monitoring data, the provision of electrical power to one or more areas and/or devices situated within a household or other location. In certain embodiments, the CMS module 142 may be incorporated into the utility meter 105. In other embodiments, the CMS module 142 may be incorporated into another device or system in communication with the utility meter 105.

In operation, the CMS module 142 may receive security monitoring data, such as various measurements, alerts, and/or alarms that are generated by the security devices 110. For example, one or more network interfaces 136 associated with the utility meter, such as a Home Area Network ("HAN") interface, a ZigBee interface and/or ZigBee adaptor, a radio frequency ("RF") interface, a serial communication link interface, a local area network interface a local area network interface, and/or a wired interface, may receive security monitoring data from the security devices 110 via any number of local networks or home networks 115. The received security monitoring data may then be provided to the CMS module 142. The CMS module 142 may be configured to generate and/or format security messages for communication to one or more central systems 120 (e.g., remote security monitoring systems, etc.) and/or user devices 125 (e.g., mobile devices, etc.). In certain embodiments, the CMS module 142 may generate security messages utilizing at least a portion of the security monitoring data. For example, the CMS module 142 may analyze or evaluate security monitoring data received from motion detectors or other devices, and the CMS module 142 and identify, based upon the analysis, one or more security alerts or alarm conditions. As another example, the CMS module 142 may receive alerts and/or other data from a local security system (e.g., a security panel situated within a household), and the CMS module 142 may format the received alerts and/or data for communication to the central systems 120 and/or user devices 125.

A wide variety of different types of security messages may be generated and/or formatted by the CMS module 142 as desired in various embodiments of the invention, such as short message service ("SMS") messages, electronic mail messages, voice or audio messages (e.g., voicemail messages, recorded alert messages, etc.), messages communicated via social media sites, etc. Once a security message has been generated and/or formatted by the CMS module 142, the CMS module 142 may direct the output and communication of the security message by the utility meter 105 via any number of suitable networks 130. For example, the CMS module 142 may direct the utility meter 105 to transmit the message utilizing a Global System for Mobile Communications ("GSM") transceiver, a General Packet Radio Service ("GPRS") transceiver, a Worldwide Interoperability for Microwave Access ("WiMAX") transceiver, n Ethernet transceiver, a 3G transceiver, or a radio frequency ("RF") mesh transceiver incorporated into the utility meter 105. As another example, the CMS module 142 may direct the utility meter 105 to transmit the message utilizing broadband over power line ("BPL") communications utilizing a suitable power line carrier communication ("PLCC") transceiver.

Additionally, in certain embodiments, the CMS module 142 may direct the utility meter 105 to generate and/or output one or more visual indicators for a generated message or alert. For example, the CMS module 142 may direct the utility meter 105 to output an alert indication utilizing any number of associated output devices, such as a speaker, one or more light emitting diodes ("LEDs"), a LED display, a liquid crystal display ("LCD"), a controller display unit, a human machine interface, an in home display, a central display unit, etc.

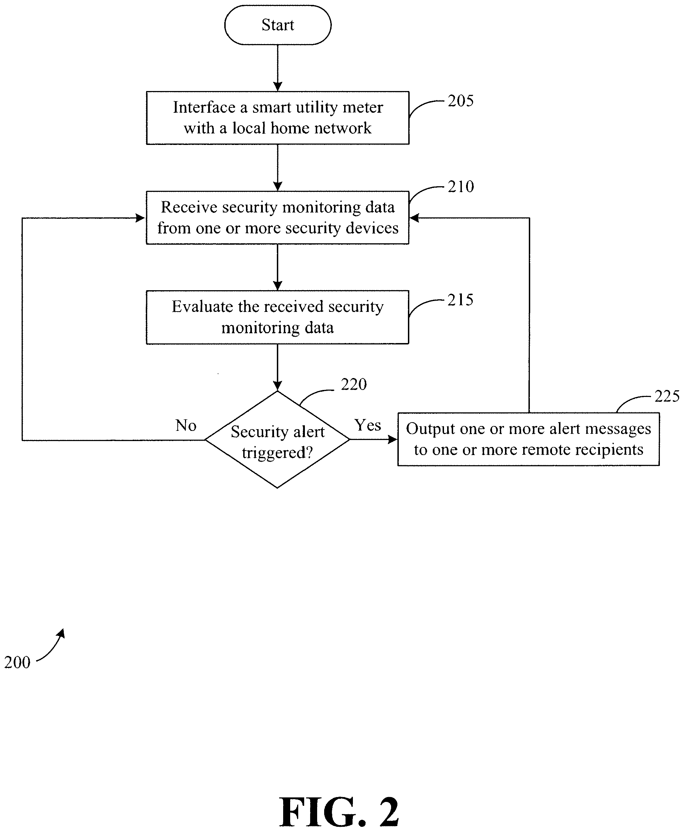

In certain embodiments, the CMS module 142 may additionally be configured to control the provision of electric power to any number of areas or portions associated with a household or other location and/or to any number of associated electrical loads or devices. For example, the CMS module 142 may analyze received presence detection data (e.g., motion sensor data) and/or access control data (e.g., electronic entry data, etc.) in order to identify occupied and/or unoccupied areas of a location. Based upon the analysis, the CMS module 142 may alter the provision of power to any number of electrical loads within unoccupied areas of the location. For example, the CMS module 142 may direct lights and/or various equipment or devices (e.g., televisions, air conditioners, etc.) to be turned off and/or to adjust operation (e.g., adjust the output of an air condition or heater unit, etc.). In this regard, the CMS module 142 may conserve electricity and/or other utilities in an attempt to lower the utility bills of a consumer. One example of the operations of the CMS module 142 is described in greater detail below with reference to FIG. 2.

With continued reference to the utility meter 105, the one or more network or communications interfaces 144 may facilitate connection of the utility meter 105 to any number of suitable networks, such as the local or home network(s) 115 and the wide area network(s) 130. In this regard, the utility meter 105 may receive data from and/or communicate data to other components of the system 100. As desired, the utility meter 105 may additionally include any number of network cards and/or network interface devices that facilitate communication with the local networks 115, such as a ZigBee adaptor, a radio frequency ("RF") transceiver, a Wi-Fi transceiver, etc. Similarly, the utility meter 105 may include any number of network cards and/or communications devices that facilitate communication with the wide area networks 130, such as a GSM transceiver, a GPRS transceiver, another cellular communications device, a BPL adaptor, any number of Ethernet cards, etc.

The utility meter 105 may typically receive power from a connected power grid and/or power line. Additionally, as desired in certain embodiments, the utility meter 105 may include any number of suitable back-up power supplies, such as one or more batteries 144 and/or one or more super capacitors. In the event of a power failure, the batteries 144 or other power supplies may provide power to the utility meter 105. Additionally, the CMS module 142 may be configured to detect a loss of power event, and the CMS module 142 may be configured to generate one or more security messages or power loss indication messages based upon the detection of a loss of power event (e.g., a severing of a connection to the utility meter by an intruder). Once generated, a security or indication message may be communicated to any number of central systems 120 and/or to user devices 125. In this regard, a relatively tamper-resistant meter may be provided.

With continued reference to FIG. 1, the system may include any number of security devices 110. The security devices 110 may be configured to collect security monitoring data and provide at least a portion of the security monitoring data to the utility meter 105 via the one or more local networks 115. As desired, a wide variety of different types of security devices may be in direct or indirect communication with the utility meter 105. These security devices 110 include, but are not limited to, intrusion and property protection devices, presence detection sensors, motion sensors, security cameras, access control devices (e.g., electronic locks, key card access devices, etc.), smoke detectors, carbon monoxide detectors, mechanical safety switches, machine guarding devices, contact switches, vibration sensors, digital security modules, home security systems (e.g., security panels, etc.), and/or other devices.

In certain embodiments, one or more sensors 150 or other devices may be in direct communication with the utility meter 105 via the local networks 115. In other embodiments, one or more sensors 152, 154 or other devices may communicate with a digital security module 156 via one or more wired or wireless connections. The digital security module 156 may be any suitable module that facilitates the collection of data from one or more sensors or other devices and/or the control of the various sensors or other devices. For example, the digital security module 156 may include a controller for an access control system, a data collection module associated with an area of a location, etc. One security monitoring data is collected by the digital security module 156, the digital security module 156 may process and/or evaluate the collected data. Additionally, the digital security module 156 may direct the communication of at least a portion of the data to the utility meter 105.

In yet other embodiments, one or more sensors 158, 160, 164 and/or digital security modules 162 may be in communication with a home security system 166, such as a central alarm panel associated with a location. For example, one or more devices 158, 160 may communicate with a digital security module 162 that is in communication with the home security system 166. As another example, one or more devices 164 may communicate directly with the home security system 166. Communications with the home security system 166 may be facilitated via any number of suitable wired and/or wireless connections and/or communications techniques. The home security system 166 may collect, analyze, and/or evaluate security monitoring data. As desired, the home security system 166 may generate various alerts and/or other messages based upon an analysis of the security monitoring data, such as an unauthorized entry alert, etc. The home security system 166 may then communicate collected data and/or generated alerts to the utility meter 105 via the local networks 115.

As desired, certain security devices 110, such as the home security system 166 and/or a digital security module 156, 162, may be suitable processor-driven devices that facilitate collection of security monitoring data and communication of data and/or alerts to the utility meter. As such, certain security devices 110 may include any number of processors, memory devices, and/or communications interfaces. These components may be similar to those described above with reference to the utility meter 105.

The one or more local networks 115 may include any number of suitable networks that facilitate communications between the utility meter 105 and/or other components of the system 100, such as the security devices 110. Examples of suitable local networks 115 include, but are not limited to, a Home Area Network ("HAN"), a ZigBee specification wireless personal area network, a radio frequency network, a Bluetooth™ enabled network (trademark owned by BLUETOOTH SIG, INC.), any suitable wireless network, and/or any suitable wired network.

With continued reference to FIG. 1, one or more central systems 120 may be in communication with the utility meter 105. A central system 120 may be a central security monitoring system, such as a system maintained by a security company and/or a system maintained by a power company or other utility. As such, the central system 120 may include any number of processor-driven devices that facilitate the receipt and processing of security messages, such as generated security alerts and/or collected security data. For example, the central system 120 may include any number of personal computing devices, server computers, and/or other computing devices. A computing device associated with the central system 120 may include any number of processors, memory devices, and/or communications interfaces. These components may be similar to those described above with reference to the utility meter 105. In operation, the central system 120 may receive and process security messages. Based upon the processing of the security messages, the central system 120 may take a wide variety of control actions. For example, police officers may be dispatched to respond to a security alert. As another example, the central system 120 may contact a customer associated with the monitored location. Additionally, the central system 120 may be configured to communicate commands to the utility meter 105 and/or to communicate security messages to the user devices 125.

Additionally, as desired in various embodiments, one or more user devices 125 may be in communication with the utility meter 105. Any number of user devices 125 may be utilized as desired in various embodiments, such as mobile devices, personal digital assistants, personal computers, etc. Similar to the central system 120, a user device 125 may include any number of processor-driven devices that facilitate the receipt and processing of security messages, such as generated security alerts and/or collected security data. As such, a user device 125 may include any number of processors, memory devices, and/or communications interfaces. These components may be similar to those described above with reference to the utility meter 105. In operation, a user device 125 may be configured to receive one or more security messages from the utility meter 105 and/or present the messages to a user. Additionally, the user device 125 may be configured to receive commands from a user (e.g., a command to arm or disarm a security system, a request to escalate an alert, etc.) and communicate received commands to the central systems 120 and/or the utility meter 105.

One or more wide area networks 130 may facilitate communications between the utility meter 105, central systems 120, and/or user devices. A wide variety of suitable wide are networks 130 may be utilized as desired in various embodiments of the invention, such as, a cellular network, a satellite-based network, the Internet, or any other wide area network.

As desired, embodiments of the invention may include a system 100 with more or less than the components illustrated in FIG. 1. Additionally, certain components of the system 100 may be combined in various embodiments of the invention. The system 100 of FIG. 1 is provided by way of example only.

FIG. 2 is a flowchart illustrating one example method 200 for providing security services utilizing a smart utility meter, according to an illustrative embodiment of the invention. The method 200 may be utilized in association with one or more security systems, such as the system 100 illustrated in FIG. 1. In certain embodiments, the operations of the method 200 may be performed by a suitable central monitoring system ("CMS") module incorporated into and/or in communication with a utility meter, such as the CMS module 142 associated with the utility meter 105 of FIG. 1.

The method 200 may begin at block 205. At block 205, a smart utility meter, such as the utility meter 105 illustrated in FIG. 1, may be interfaced with a local network or a home network. For example, the utility meter 105 may be connected to a local wireless network utilizing a suitable ZigBee adaptor. As another example, the utility meter 105 may be connected to a local network utilizing one or more wired connections. In this regard, the utility meter 105 may be configured to receive security monitoring data from any number of security devices, such as the devices 110 illustrated in FIG. 1.

At block 210, security monitoring data and/or security alerts may be received from the one or more security devices 110 (e.g., home security systems, digital security modules, sensors, detectors, etc.) via the local network. At block 215, which may be optional in certain embodiments of the invention, the received data may be evaluated and/or processed. For example, the received data may be evaluated in order to determine whether a security alert is included in the data or whether a security alert should be triggered based upon the received data (e.g., an unauthorized entry, etc.).

At block 220, a determination may be made as to whether a security alert has been triggered and/or whether other security data should be communicated to one or more remote devices. If it is determined at block 220 that no alert messages have been generated, then operations may either end or return to block 210. If, however it is determined at block 220 that a security alert has been triggered, then operations may continue at block 225. At block 225, one or more alert messages may be generated and/or formatted for output to one or more remote recipients, such as a central server and/or a user device. The alert messages may then be output by the utility meter 105 via any number of wide area networks utilizing any number of suitable transceivers and/or network interface devices. For example, an alert message may be communicated to a recipient by a cellular transceiver (e.g., a GSM transceiver, a GPRS transceiver, etc.) associated with the utility meter 105. In this regard, security communications may be facilitated by the utility meter 105. Operations may then either end or return to block 210. In this regard, security monitoring data may be continually received and/or evaluated by the utility meter 105

In a similar manner as that described above for communicating alert messages, other types of messages may be generated and communicated by the utility meter 105, such as status messages and/or messages that include collected security monitoring data. Additionally, as desired, status and/or alert indicators may be output for display by the utility meter 105.

The method 200 of FIG. 2 may end following either block 220 or block 225. Alternatively, as shown in FIG. 2, the operations of the method 200 may be continuously performed in a repeating loop.

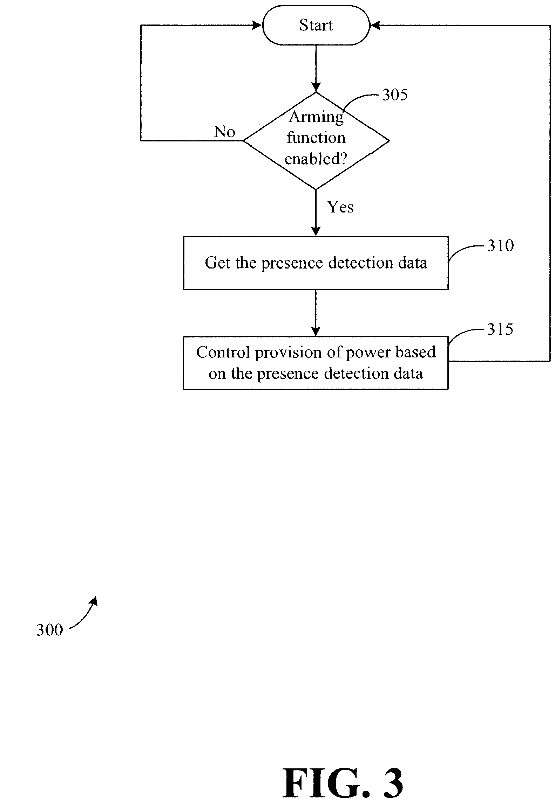

FIG. 3 is a flowchart of an example method 300 for providing power management services utilizing a smart utility meter, according to an illustrative embodiment of the invention. The method 300 may be utilized in association with one or more security systems, such as the system 100 illustrated in FIG. 1. In certain embodiments, the operations of the method 300 may be performed by a suitable central monitoring system ("CMS") module incorporated into and/or in communication with a utility meter, such as the CMS module 142 associated with the utility meter 105 of FIG. 1.

The method 300 may begin at block 305. At block 305, a determination may be made as to whether an arming function associated with a security system has been enabled. In other words, a determination may be made as to whether a security system has been armed. Additionally, as desired, determination may be made as to whether presence detection data (e.g., motion detector data) and/or access control data (e.g., secured access point data) is available. If it is determined at block 305 that the security system has not been armed and/or that presence detection data and/or access control data is not available, then operations may either end or return to a start state. If, however, it is determined at block 305 that the security system has been armed and/or that presence detection data and/or access control data is available, then operations may continue at block 310.

At block 310, presence detection data and/or access control data may be obtained. The presence detection data and/or access control data may be analyzed or evaluated in order to identify occupied and/or unoccupied areas of a household or other location. For example, unoccupied rooms may be identified based upon data received from motion detectors. At block 315, the provision of power to the various areas of the location and/or associated electrical devices may be controlled based upon the evaluation of the presence detection and/or access control data. For example, the utility meter 105 may shut off lights, fans, televisions, and/or other electrical devices that are situated in and/or otherwise associated with a room or area that has been identified as unoccupied. As desired, the utility meter 105 may communicate power control signals or messages to any number of electrical devices via the local network. In this regard, the utility meter 105 may manage power consumption at the location in an attempt to lower or reduce utility bills. Operations may then either end or return to a start state.

The method 300 of FIG. 3 may end following either block 305 or block 315. Alternatively, as shown in FIG. 3, the operations of the method 300 may be continuously performed in a repeating loop.

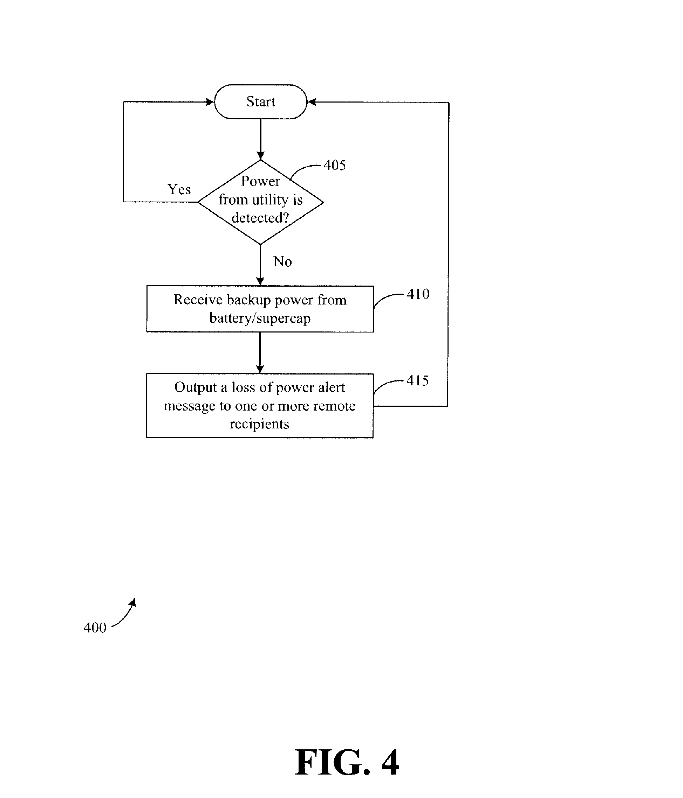

FIG. 4 is a flowchart of an example method 400 for providing security services utilizing a smart utility meter during a power failure event, according to an illustrative embodiment of the invention. The method 400 may be utilized in association with one or more security systems, such as the system 100 illustrated in FIG. 1. In certain embodiments, the operations of the method 400 may be performed by a suitable central monitoring system ("CMS") module incorporated into and/or in communication with a utility meter, such as the CMS module 142 associated with the utility meter 105 of FIG. 1.

The method may begin at block 405. At block 405, a determination may be made as to whether power from a utility service (e.g., power from an electrical power line) is available or detected. In other words, a determination may be made as to whether a loss of power event is detected. If it is determined at block 405 that power from the utility is detected or available, then operations may either end or return to a start state. If, however, it is determined at block 405 that power from the utility is not detected or is not available, then operations may continue at block 410.

At block 410, backup power may be received from one or more backup power sources, such as one or more batteries and/or one or more super capacitors. Operations may then continue at block 415. At block 415, a loss of power alert message may be generated and output for communication to one or more remote recipients via the wide area networks. As desired, battery backup time may additionally be tracked and communicated periodically and/or upon request. In this regard, tampering with the utility meter may be detected or identified. Additionally, any other alert messages generated based upon the receipt and/or analysis of security monitoring data may be output by the utility meter 105 while the utility meter 105 is powered by backup power sources. Operations may then either end or return to a start state.

The method 400 of FIG. 4 may end following either block 405 or block 415. Alternatively, as shown in FIG. 4, the operations of the method 400 may be continuously performed in a repeating loop.

The operations described and shown in the methods 200, 300, 400 of FIGS. 2-4 may be carried out or performed in any suitable order as desired in various embodiments of the invention. Additionally, in certain embodiments, at least a portion of the operations may be carried out in parallel. Furthermore, in certain embodiments, less than or more than the operations described in FIGS. 2-4 may be performed. As desired, the operations set forth in the methods 200, 300, 400 may be performed in a loop as a location is monitored.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special-purpose computer, a processor, or other programmable data processing apparatus to produce a particular machine, such that the instructions that execute on the computer, processor, or other programmable data processing apparatus create means for implementing one or more functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer readable program code or program instructions embodied therein, said computer readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the spirit and scope of the appended claims.

This written description uses examples to disclose the invention, including the best mode, and also to enable any person skilled in the art to practice the invention, including making and using any devices or systems and performing any incorporated methods. The patentable scope the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A utility meter (105), comprising:
at least one local network interface (136) configured to receive security monitoring data from one or more security devices (110);
at least one transceiver (136) configured to communicate one or more messages associated with the received security monitoring data to at least one of (i) a user device (125) or (ii) a security monitoring center (120) via a wide area network; and
at least one processor (132) configured to (i) generate, based at least in part upon the received security monitoring data, the one or more messages, and (ii) direct the at least one transceiver to output the one or more messages.

2. The utility meter (105) of Claim 1, wherein the at least one processor (132) is further configured to (i) generate, based upon an evaluation of the received security monitoring data, a security alert and (ii) incorporate the security alert into at least one of the one or more messages.

3. The utility meter (105) of Claim 1 or 2, wherein the security monitoring data comprises presence detection data associated with one or more areas within a structure, and
wherein the at least one processor (132) is further configured to control, based at least in part upon the presence detection data, provision of electrical power to at least one of (i) the one or more areas or (ii) one or more electrical devices associated with the one or more areas.

4. The utility meter (105) of Claim 3, wherein the at least one processor (132) is configured to control the provision of electrical power by controlling one of (i) a supply of an electrical power signal or (ii) an amount of supplied power.

5. The utility meter (105) of any of Claims 1 to 4, wherein the at least one local network interface (136) comprises at least one of (i) a Home Area Network (HAN) interface, (ii) a ZigBee interface, (iii) a radio frequency network interface, (iv) a serial communication link interface, or (v) a local area network interface.

6. The utility meter (105) of any of Claims 1 to 5, wherein the one or more security devices (110) comprise at least one of (i) a home security system, (ii) a smoke detector, (iii) a presence detection sensor, (iv) an access control device, (v) a mechanical safety switch, (vi) a contact switch, (vii) a vibration sensor.

7. The utility meter (105) of any of Claims 1 to 6, wherein the at least one transceiver (136) comprises at least one of (i) a Global System for Mobile Communications (GSM) transceiver, (ii) a General Packet Radio Service (GPRS) transceiver, (iii) a Worldwide Interoperability for Microwave Access (WiMAX) transceiver, (iv) an Ethernet transceiver, (v) a 3G transceiver, (vi) a power line carrier communication (PLCC) transceiver, or (vii) a radio frequency (RF) mesh transceiver.

8. The utility meter (105) of any preceding Claim, wherein the one or more messages comprise at least one of (i) a short message service (SMS) message, (ii) an electronic mail message, or (iii) a voice message.

9. The utility meter (105) of any preceding Claim, wherein the at least one processor (132) is further configured to (i) detect a loss of power event, (ii) generate an alert message associated with the detection, and (iii) direct the at least one transceiver (136) to output the generated alert message.

10. The utility meter (105) of any preceding Claim, further comprising:
at least one power supply (144) configured to provide power to the utility meter during a loss of power event.

11. A method for providing home security services, the method comprising:
receiving, by a utility meter from one or more security devices via at least one local network, security monitoring data;
generating, by the utility meter based at least in part upon the received security monitoring data, one or more security messages; and
communicating, by the utility meter to at least one of (i) a user device or (ii) a security monitoring center via a wide area network, the one or more generated messages.

12. The method of Claim 11, further comprising:
generating, by the utility meter based upon an evaluation of the received security monitoring data, a security alert, wherein
generating one or more security messages comprises generating one or more messages comprising an identifier of the generated security alert.

13. The method of Claim 11 or 12, wherein receiving security monitoring data comprises receiving presence detection data associated with one or more areas within a structure, and further comprising:
controlling, based at least in part upon the received presence detection data, provision of electrical power to at least one of (i) the one or more areas or (ii) one or more electrical devices associated with the one or more areas.

14. The method of Claim 11, 12 or 13, wherein receiving security monitoring data via at least one local network comprises receiving security monitoring data via at least one of
(i) a Home Area Network (HAN) interface, (ii) a ZigBee interface, (iii) a radio frequency interface, (iv) a serial communication link interface, or (v) a local area network interface.

15. A system, comprising:
one or more motion presence detection sensing devices situated within a location and configured to collect presence detection data; and
a utility meter as recited in any of claims 1 to 10.
